# EUROPÄISCHE PATENTSCHRIFT

(11) **EP 3 649 365 B1**
(45) Veröffentlichungstag und Bekanntmachung des Hinweises auf die Patenterteilung: **25.08.2021**
(21) Anmeldenummer: 18738267.6
(22) Anmeldetag: 03.07.2018
(51) Int. Cl.: F16D 59/02, H02K 7/102, F16D 121/22

(54) **ELEKTROMAGNETISCH BETÄTIGBARE FEDERKRAFTBREMSE UND ANTRIEBSSYSTEM**
ELECTROMAGNETICALLY ACTUATED SPRING-APPLIED BRAKE AND DRIVE SYSTEM
FREIN À RESSORT À COMMANDE ÉLECTROMAGNÉTIQUE ET SYSTÈME D'ENTRAÎNEMENT

(30) Priorität: 03.07.2017 DE 202017103961 U
(43) Veröffentlichungstag der Anmeldung: 13.05.2020
(73) Patentinhaber: Kendrion INTORQ GmbH, 31855 Aerzen (DE)
(72) Erfinder: NEUMANN, Christopher, 31171 Nordstemmen (DE)
(74) Vertreter: Westphal, Mussgnug & Partner Patentanwälte mbB
(86) Internationale Anmeldenummer: PCT/EP2018/067890
(87) Internationale Veröffentlichungsnummer: WO 2019/007932

(56) Entgegenhaltungen:
- DE-A1- 2 832 523
- JP-A- H02 150 520
- JP-A- H03 168 423
- US-A- 4 156 478
- US-A- 5 685 398

## Beschreibung

Die Erfindung betrifft eine elektromagnetisch betätigbare Federkraftbremse und ein Antriebssystem mit einer elektromagnetisch betätigbaren Federkraftbremse sowie ein Verfahren zur Montage einer elektromagnetischen Federkraftbremse. Elektromagnetisch betätigbare Federkraftbremsen weisen eine elektrische Spule zum Betätigen der Bremse auf. Die Spule erzeugt ein magnetisches Feld, welches auf ein bewegliches Bremselement wirkt. Bei Bremsen der in Rede stehenden Art wird die Bremse durch die Wirkung des elektrischen Feldes auf das bewegliche Bremselement geöffnet bzw. gelüftet. Man spricht in diesem Fall auch von einer elektromagnetisch lüftenden Federkraftbremse. Der Vorteil gegenüber einer Bremse, die aufgrund elektromagnetischer Kräfte geschlossen bzw. verknüpft wird, ist der, dass eine elektromagnetisch lüftende Federkraftbremse beim Ausfall jeglicher Hilfsenergie schließt, was aus Sicherheitsgründen in einer Vielzahl von Einsatzfällen erwünscht ist.

Die für das Funktionieren der Bremse notwendigen Reibkräfte werden hierbei dadurch erzeugt, dass das Bremselement einen mit einer Welle verdrehsteif verbindbaren Bremsrotor gegen ein Bremsgegenelement drückt. Das Bremselement, welches auch als Ankerscheibe bezeichnet wird, der Bremsrotor und das Bremsgegenelement sind hierfür vorzugsweise mit geeigneten Reibbelägen ausgestattet. Im Fall der elektromagnetisch lüftenden Federkraftbremse wird die Kraft, mit der das Bremselement den Rotor an das Bremsgegenelement drückt, durch elastische Elemente erzeugt. Bei diesen kann es sich beispielsweise um Druckfedern, insbesondere um Schraubendruckfedern handeln.

Federkraftbremsen der in Rede stehenden Art werden regelmäßig mit Befestigungselementen an Vorrichtungen angebracht. Hierbei bilden die Federkraftbremsen oftmals einen Bestandteil eines Antriebssystems.

Hierbei ist es oftmals so, dass ein Befestigungselement zum Befestigen der Federkraftbremse an der Vorrichtung die Bremse gleichzeitig in ihrem montierten Zustand zusammenhält. Es versteht sich, dass es sich um eine Mehrzahl Befestigungselemente handeln kann, die diese Funktion erfüllen.

Bei derartigen Bremsen gestaltet sich die Montage oft aufwändig, da die Federkraftbremse in einem Zustand geliefert wird, in dem sie nicht als einstückiges Objekt handhabbar ist. Es müssen mehrere Teile gleichzeitig in die vorgesehene Montageposition gebracht und dann mit dem Befestigungselement befestigt werden. Alternativ ist es möglich, dass die Bremse durch zusätzliche Elemente, wie beispielsweise Bänder, die die Federkraftbremse umschließen, zusammengehalten wird. Diese zusätzlichen Elemente müssen dann bei der Montage der Bremse entfernt werden, was ebenfalls einen Mehraufwand bedeutet.

Das Patentdokument US 5 685 398 A offenbart eine Federkraftbremse, die mit Hilfe von Sicherungsklammern im vormontierten Zustand zusammengehalten wird. Weitere relevante Federkraftbremsen aus dem Stand der Technik sind in JP H02 150520 A, JP H03 168423 A, DE 28 32 523 A1 und US 4 156 478 A offenbart.

Der Erfindung liegt daher die Aufgabe zugrunde, eine Federkraftbremse bzw. ein Antriebssystem mit einer Federkraftbremse sowie ein Verfahren zur Montage einer Federkraftbremse aufzuzeigen, welche eine einfachere Montage der Federkraftbremse ermöglichen.

Die Aufgabe wird gelöst durch eine Federkraftbremse, ein Antriebssystem und ein Verfahren zur Montage einer Federkraftbremse mit den Merkmalen der unabhängigen Ansprüche. Die Merkmale der abhängigen Ansprüche betreffen vorteilhafte Ausführungsformen.

Die Aufgabe wird insbesondere dadurch gelöst, dass die Federkraftbremse durch ein Sicherungselement, das mit einem Befestigungselement zur Befestigung der Federkraftbremse an einer Vorrichtung zusammenwirkt, in einem vormontierten Zustand zusammengehalten wird.

Ein auf diese Weise mit dem Befestigungselement zusammenwirkendes Sicherungselement ermöglicht es, die Bremse zusammenzuhalten, so dass sie im besten Fall bis zum Abschluss der Montage der Federkraftbremse an der Vorrichtung als einstückiges Objekt handhabbar ist.

Bei dem Befestigungselement kann es sich beispielsweise um eine Schraube handeln. Diese ist bevorzugt parallel zur Achse der Bremse orientiert.

Durch das Sicherungselement kann das Bremsgegenelement in seiner bestimmungsgemäßen Position an der Federkraftbremse gehalten werden. Hierdurch ermöglicht sich ein vorteilhafter Aufbau, bei dem insbesondere Bremselement und/oder Bremsrotor zwischen dem Gehäuse der Bremse, welches insbesondere die Federelemente und/oder die elektrische Spule aufnimmt, angeordnet sind. In diesen Fällen kann durch die Befestigung des Bremsgegenelementes an der Federkraftbremse ein stabiles, einstückig handhabbares Gebilde geschaffen werden.

Das Sicherungselement kann eine Klemmkraft auf das Befestigungselement ausüben, die insbesondere im vormontierten Zustand ein unbeabsichtigtes Verschieben des Sicherungselementes auf dem Befestigungselement verhindert. Eine derartige Fixierung des Sicherungselementes am Befestigungselement ist insbesondere deswegen von Vorteil, weil sie es erlaubt, das Sicherungselement durch eine Überwindung der Klemmkraft auf dem Befestigungselement zu verschieben. Dies ermöglicht eine einfache Überführung der Federkraftbremse in den vormontierten Zustand, in dem das Sicherungselement auf das Befestigungselement aufgeschoben wird.

Besonders vorteilhaft ist dies dann, wenn es sich bei dem Befestigungselement um eine Schraube handelt. Das Sicherungselement sitzt dann auf dem Gewinde der Schraube, wodurch insbesondere auch ein gut ausgeprägter Kraft- und/oder Formschluss zwischen Sicherungselement und Befestigungselement entsteht.

Eine weitere vorteilhafte Ausführungsform sieht eine provisorische Befestigung des Bremsgegenelements vor. Dies ist insbesondere für den Fall sinnvoll, dass die Federkraftbremse - beispielsweise für den Transport - zunächst vormontiert wird, die endgültige Fixierung des Bremsgegenelements an der Bremse jedoch erst mit der Befestigung der Bremse, beispielsweise an einer Antriebseinheit, erfolgt. Dies kann beispielsweise dann der Fall sein, wenn die Befestigungselemente zum Befestigen der Federkraftbremse ebenfalls die Befestigung des Bremsgegenelements bewirken.

Dies kann beispielsweise dadurch realisiert sein, dass das Bremsgegenelement durch Sicherungselemente in seiner bestimmungsgemäßen bzw. vormontierten Position gehalten wird. Bei den Sicherungselementen kann es sich beispielsweise um Klemmringe, Klemmscheiben, Unverlierbarkeitsscheiben und/oder O-Ringe handeln.

Die Sicherungselemente wirken dabei bevorzugt mit Befestigungselementen zusammen, wie beispielsweise mit Gewindestiften und/oder Schrauben. Nach einer besonders bevorzugten Ausführungsform dienen die Befestigungselemente, mit denen Sicherungselemente zusammenwirken, der Befestigung der Bremse, beispielsweise an einer Antriebseinheit. Die Befestigungselemente werden, beispielsweise zur Ermöglichung des Transports, bevorzugt durch das Gehäuse, die Distanzelemente und das Bremsgegenelement hindurchgeführt und mit jeweils einem Sicherungselement gesichert. Bei der endgültigen Montage der Federkraftbremse, beispielsweise an einer Antriebseinheit, wird die Federkraftbremse mit den Befestigungselementen befestigt. Die Sicherungselemente können hierbei gegebenenfalls entfernt werden.

Die Spule, mit der das elektromagnetische Feld zum Betätigen der Federkraftbremse erzeugt wird, kann koaxial zu der Welle angeordnet sein. Die Spule befindet sich dabei in einem Aufnahmeraum, der in einem Gehäuse angeordnet sein. Der Aufnahmeraum umgibt hierbei einen inneren Gehäusebereich des Gehäuses und wird wiederum von einem äußeren Gehäusebereich des Gehäuses umgeben. In seinem Querschnitt in einer zur Drehachse der Welle senkrechten Schnittebene kann der Aufnahmeraum nach dem Stand der Technik einen Querschnitt in Gestalt eines Kreisrings aufweisen.

Die von der Form eines Kreisrings abweichende Form des Querschnitts des Aufnahmeraums führt dazu, dass der äußere Gehäusebereich Bereiche aufweist, die in radialer Richtung unterschiedliche Materialstärken aufweisen. Bereiche mit größerer Materialstärke können dann genutzt werden, um dort Elemente der Federkraftbremse anzuordnen. Auf diese Weise lässt sich die Materialstärke und/oder die projezierte Fläche des äußeren Gehäusebereichs insgesamt reduzieren. Hierdurch werden bessere magnetische Randbedingungen geschaffen.

Besonders bevorzugt kann der Aufnahmeraum bzw. der Querschnitt des Aufnahmeraums in einer zur Drehachse der Welle senkrechten Schnittebene eine einem Polygon angenäherte Form aufweisen. Unter einer einem Polygon angenäherten Form sind in diesem Zusammenhang insbesondere solche Formen zu verstehen, bei denen die Seiten und/oder Ecken des Polygons Krümmungen aufweisen. Die Krümmungen dienen hierbei dazu, zum einen zu enge Radien der Spulenwicklung im Bereich der Ecken des Polygons zu vermeiden, zum anderen den Verlauf der Spule zwischen dem äußeren Gehäusebereich und dem inneren Gehäusebereich im Hinblick auf möglichst optimale magnetische Verhältnisse und/oder eine möglichst gute Ausnutzung des Bauraumes zu optimieren.

Besonders bevorzugt kann der Querschnitt des Aufnahmeraums eine einem Dreieck angenäherte Form aufweisen. Das Dreieck ist das Polygon, welches die größte Abweichung von der Form eines Kreises aufweist. Dementsprechend ermöglicht eine einem Dreieck angenäherte Form eine besonders starke Abweichung des Querschnitts von der Form eines Kreisrings. Dadurch lässt sich eine entsprechend starke Variation der Materialstärke des äußeren Gehäusebereichs erzielen.

Die vorstehenden Ausführungen zur Gestaltung des Aufnahmeraums bzw. des Querschnitts des Aufnahmeraums betreffen ebenfalls die geometrische Gestaltung der Flächen des inneren Gehäusebereichs und/oder des äußeren Gehäusebereichs, die den Aufnahmeraum in radialer Richtung nach innen bzw. nach außen begrenzen. In vorteilhafter Weise weisen die zur Drehachse der Welle senkrechten Querschnitte durch diese Flächen ebenfalls eine einem Polygon angenäherte Form auf.

Bevorzugt ergibt sich so eine Gestaltung, bei der der Aufnahmeraum und/oder eine den Aufnahmeraum in radialer Richtung begrenzende Fläche des inneren Gehäusebereichs und/oder eine den Aufnahmeraum in radialer Richtung begrenzende Fläche des äußeren Gehäusebereichs mit unterschiedlich starker Krümmung in Umfangsrichtung aufweist. Bevorzugt verteilen sich hierbei Bereiche mit stärkerer und schwächerer Krümmung über den Verlauf des Aufnahmeraums bzw. der Fläche in Umfangsrichtung. Bevorzugt wechseln sich hierbei Bereiche mit stärkerer Krümmung und Bereiche mit schwächerer Krümmung ab.

Durch die Verwendung unterschiedlich stark gekrümmter Bereiche wird bevorzugt erreicht, dass der äußere Gehäusebereich im Bereich der stärker gekrümmten Bereiche des Aufnahmeraums und oder der Fläche dünnwandiger ausgeführt ist als im Bereich der schwächer gekrümmten Bereiche des Aufnahmeraums und/oder der Fläche. Bevorzugt können Aufnahmen für Verbindungselemente und/oder Aufnahmen für elastische Elemente zur Erzeugung der Bremskraft und/oder Distanzelemente im Bereich der schwächer gekrümmten Bereiche des Aufnahmeraums und/oder der Fläche des äußeren Gehäusebereichs angeordnet sein.

Der Aufnahmeraum und/oder die den Aufnahmeraum in radialer Richtung begrenzende Fläche des inneren Gehäusebereichs und/oder die den Aufnahmeraum begrenzende Fläche des äußeren Gehäusebereichs weist bevorzugt eine zumindest im Wesentlichen drehsymmetrische Gestaltung mit der Drehachse der Welle als Drehsymmetrieachse auf. Eine solche Gestaltung erzeugt eine verhältnismäßig gleichmäßige Verteilung des elektromagnetischen Feldes. Unter einer im Wesentlichen drehsymmetrischen Gestaltung ist hierbei insbesondere zu verstehen, dass der größte Teil des Aufnahmeraums bzw. der Flächen drehsymmetrisch gestaltet ist. An einzelnen Stellen kann die Gestaltung von der Drehsymmetrie abweichen, beispielsweise um Durchführungen für elektrische Leitungen vorzusehen. Derartige geringfügige Abweichungen haben keinen praktisch relevanten Einfluss auf die Ausprägung des elektromagnetischen Feldes.

Bevorzugt umgibt der innere Gehäusebereich eine Wellendurchführung zur Durchführung der Welle. Die Durchführung der Welle durch den inneren Gehäusebereich ermöglicht eine Anordnung der Bremse, beispielsweise an einer Antriebseinheit, bei der die Bremse mit ihrem Gehäuse zu der Antriebseinheit hinweisend an dieser aufgenommen wird. Es versteht sich, dass auch das Bremsgegenelement eine Wellendurchführung aufweisen kann. Hierdurch ergeben sich ebenfalls die entsprechenden Montagemöglichkeiten.

Der innere Gehäusebereich und der äußere Gehäusebereich können einteilig miteinander ausgeführt sein. Dies ermöglicht es insbesondere, den inneren und den äußeren Gehäusebereich in einem formgebenden Verfahren gemeinsam herzustellen. Auch ergibt sich so ein einfacher Aufbau des Gehäuses der Bremse.

Der innere Gehäusebereich und/oder der äußere Gehäusebereich, besonders bevorzugt der einteilige innere und äußere Gehäusebereich, ist bevorzugt aus einem gesinterten Werkstoff hergestellt. Mit Sinterwerkstoffen lassen sich die erfindungsgemäßen und vorteilhaften Ausgestaltungen des Aufnahmeraums und des inneren und/oder äußeren Gehäusebereichs, die vorstehend beschrieben sind, auf besonders vorteilhafte Weise darstellen. Insbesondere kann eine endformnahe und damit kostengünstige Herstellung erfolgen.

Zur Schaffung eines Abstands zwischen dem Bremsgegenelement, bei dem es sich beispielsweise um ein gestanztes Bauteil handeln kann, und dem Gehäuse weist die Federkraftbremse bevorzugt ein Distanzelement, besonders bevorzugt eine Mehrzahl Distanzelemente, auf. Die Distanzelemente dienen dazu, zwischen dem Bremsgegenelement und dem Gehäuse einen Abstand zu schaffen, in dem der Bremsrotor und das Bremselement angeordnet werden können. Auch bestimmt die Länge dieser Distanzelemente die Länge des Weges, den das Bremselement beim Öffnen und/oder Schließen der Bremse zurücklegt. Die Länge dieses Weges wird auch als Luftspalt der Bremse bezeichnet. Sie kann sich mit fortschreitendem Verschleiß der Bremse, insbesondere bei fortschreitendem Verschleiß von Reibbelägen der Bremse, ändern.

Bevorzugt ist das Distanzelement bzw. die Mehrzahl Distanzelemente an das Gehäuse, insbesondere den äußeren Gehäusebereich, angeformt. Unter einem angeformten Distanzelement ist insbesondere ein Distanzelement zu verstehen, dass in einem kontinuierlichen und materialeinheitlichen Übergang in das Gehäuse bzw. den Gehäusebereich übergeht, also einstückig mit diesem ausgeführt ist. Dies lässt sich besonders vorteilhaft durch eine gemeinsame Herstellung von Gehäuse bzw. Gehäusebereich und Distanzelement im Wege eines Sinterverfahrens erreichen.

In vorteilhafter Weise kann das Distanzelement im Inneren einen Hohlraum zur Aufnahme eines Befestigungselements aufweisen. Bei dem Hohlraum kann es sich beispielsweise um eine Bohrung handeln. Es ist in vorteilhafter Weise jedoch auch möglich, beispielsweise im Rahmen eines Sinterverfahrens, den Hohlraum bereits bei der Formung des Distanzelements auszubilden.

In diesem Zusammenhang ist es besonders vorteilhaft, den Hohlraum konisch zu gestalten. Ein konischer Hohlraum eignet sich insbesondere zur Aufnahme von Schrauben, die sich beim Eindringen in das Distanzelement das die Schraube aufnehmende Gewinde selbst in das Material des Distanzelements schneiden. Die Verwendung derartiger Schrauben erlaubt ebenfalls eine besonders kostengünstige Montage.

Besonders vorteilhaft ist, wenn die zur Welle hinweisenden Bereiche des Distanzelements, die den Hohlraum begrenzen, eine geringere Materialstärke aufweisen als die von der Welle wegweisenden Bereiche des Distanzelements, die den Hohlraum begrenzen. Alternativ und/oder ergänzend kann der Hohlraum auch zur Welle hin offen sein. Dies erhöht den möglichen Durchmesser, den Bremsrotor und/oder die wirksame Reibfläche des Bremselements bei ansonsten gleicher Baugröße der Bremse aufweisen können. Der größere Durchmesser dieser Elemente ermöglicht eine höhere Bremswirkung.

Bei dem Antriebssystem kann es sich bevorzugt um ein Antriebssystem zum Antreiben eines Rolltores, einen Sonnenschutzantrieb oder einen Antrieb in der Medizintechnik, wie beispielsweise einen Stellantrieb für eine Operationstischverstellung oder einen Türantrieb für einen Fahrstuhl oder Aufzug oder einen Antrieb in der Lager- und Fördertechnik handeln. Weiterhin kommen Fahrantriebe für, gegebenenfalls fahrerlose, Transportsysteme in Betracht, ebenso Antriebe für Parkroboter, Dosierantriebe, beispielsweise in der Pharmaindustrie, Stellantriebe, beispielsweise zur Formatverstellung, insbesondere für Buchbindermaschinen oder Maschinen der Holzbearbeitung oder anderweitige Industrieantriebe, Antriebe in Druckmaschinen, Textilmaschinen, Umreifungsmaschinen, Mess- und Inspektionsmaschinen, Verpackungsmaschinen, Maschinen zur Etikettierung, fliegenden Sägen, Maschinen der Papier-, Textil-, Lebensmittel-, Halbleiter-, Holz- und Kunststoffindustrie.

Derartige Antriebssysteme weisen eine Antriebseinheit auf, mit der die Federkraftbremse verbunden bzw. an der die Federkraftbremse befestigt ist. Bei der Antriebseinheit kann es sich insbesondere um einen Motor, wie einen Elektromotor, oder um ein Getriebe handeln. Die Antriebseinheit weist hierbei eine durch die Federkraftbremse abzubremsende Welle auf. Mit dieser Welle wird der Bremsrotor verdrehsteif verbunden.

Das Verfahren zur Montage der Federkraftbremse an der Vorrichtung, insbesondere an dem Antriebssystem, sieht nun insbesondere vor, dass die Federkraftbremse zunächst in einen vormontierten Zustand überführt wird, in dem die Federkraftbremse durch das Sicherungselement, das mit einem Befestigungselement zum Befestigen der Federkraftbremse an der Vorrichtung zusammenwirkt, zusammengehalten wird. Hierbei kann es sich insbesondere um eine vorstehend beschriebene Federkraftbremse handeln. Zu einem späteren Zeitpunkt wird die Federkraftbremse mit dem Befestigungselement an der Vorrichtung montiert.

Insbesondere ist es möglich, dass bei der Überführung der Federkraftbremse in den vormontierten Zustand ein mechanischer Widerstand des Sicherungselementes überwunden wird. Hierbei kann das Sicherungselement eine elastische Verformung erfahren. Dies ist beispielsweise dann der Fall, wenn das Sicherungselement bei der Überführung in den vormontierten Zustand auf das Befestigungselement aufgeschoben wird, wobei das Sicherungselement verformt, insbesondere aufgedehnt, wird und infolge dessen eine elastische, auf das Befestigungselement einwirkende Reaktionskraft erzeugt.

Das Überführen der Federkraftbremse in den vormontierten Zustand kann beispielsweise in einer Presse erfolgen. Die Presse sorgt insbesondere dafür, dass das Sicherungselement mit dem Befestigungselement verbunden wird. Der Vorteil der Verwendung einer Presse liegt zunächst darin, dass die Verwendung einer Presse eine schnelle Überführung der Federkraftbremse in den vormontierten Zustand ermöglicht. Die Presse kann dabei an dem Bremsgegenelement und/oder an dem Sicherungselement angreifen.

Die vormontierte Bremse kann nun im vormontierten Zustand beispielsweise gelagert und/oder transportiert werden. Zu einem späteren Zeitpunkt wird die Bremse dann ihrer Bestimmung entsprechend in einer Vorrichtung, beispielsweise einem Antriebssystem, montiert. Hierbei bildet sich bevorzugt ein Hohlraum aus, in dem das Sicherungselement aufgenommen wird. Dies ermöglicht es, dass Anlageflächen der Bremse und der Vorrichtung miteinander in Kontakt gelangen und vorzugsweise plan aneinander anliegen. Bei diesen Kontaktflächen kann es sich beispielsweise um Flansche bzw. deren Anlageflächen handeln. Auf diese Weise kann die Bremse in einer definierten Position montiert werden. Der Hohlraum, der das Sicherungselement aufnimmt, ermöglicht es dabei, diesen flächigen Kontakt und damit eine positionsgenaue Montage der Bremse vorzunehmen, wobei gleichzeitig das Sicherungselement auf dem Befestigungselement verbleiben kann. Von daher kann die Montage mit dem Befestigungselement derart erfolgen, als sei das Sicherungselement, das ohne die Ausbildung eines entsprechenden Hohlraumes zwischen der Bremse und der Vorrichtung einen Abstand erzwingen würde, nicht vorhanden. Ein Entfernen des Sicherungselements vor der endgültigen Montage der Bremse ist somit nicht notwendig.

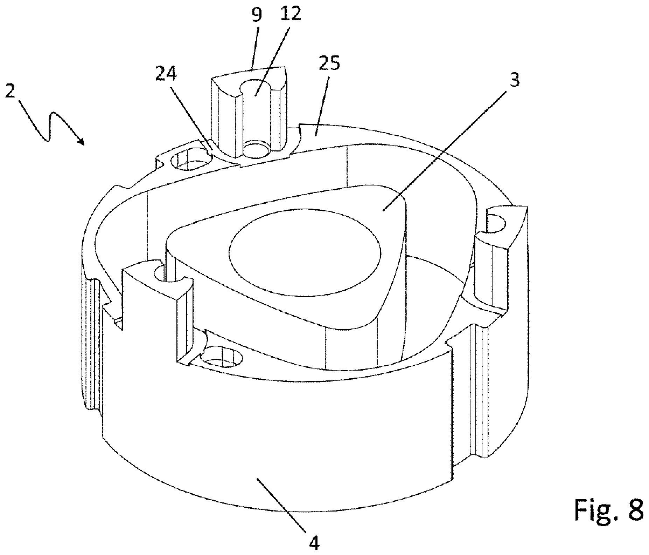

Die Erfindung wird im Folgenden anhand der Figuren 1 bis 10 schematisch näher erläutert.
Fig. 1 zeigt eine schematische perspektivische Darstellung des Gehäuses einer beispielhaften erfindungsgemäßen Federkraftbremse.
Fig. 2 zeigt eine schematische Draufsicht des in Fig. 1 dargestellten Gehäuses.
Fig. 3 zeigt eine schematische Querschnittsdarstellung einer für den Transport vormontierten erfindungsgemäßen Bremse.
Fig. 4 zeigt eine schematische Querschnittsdarstellung der Bremse aus Fig. 3 im montierten Zustand.
Fig. 5 zeigt eine schematische Querschnittsdarstellung einer weiteren für den Transport vormontierten erfindungsgemäßen Bremse.
Fig. 6 zeigt eine schematische Querschnittsdarstellung der Bremse aus Fig. 5 im montierten Zustand.
Figur 7 zeigt eine Explosionsdarstellung einer weiteren beispielhaften Federkraftbremse
Figur 8 zeigt das Gehäuse der in Figur 7 dargestellten Federkraftbremse
Figur 9 zeigt eine beispielhafte Federkraftbremse in ihrem an einer Vorrichtung montierten und ihrem vormontierten Zustand, wobei die Federkraftbremse gehäuseseitig an die Vorrichtung montiert wird
Figur 10 zeigt die in Figur 9 dargestellte Bremse, die in dem in Figur 10 dargestellten Fall mit dem Bremsgegenelement voran an eine Vorrichtung montiert wird.

Die in den Figuren dargestellten Federkraftbremsen 1 weisen beispielsweise ein Gehäuse 2 auf. Das Gehäuse 2 ist in den gezeigten Beispielen in vorteilhafter Weise einteilig ausgeführt und weist einen inneren Gehäusebereich 3 und einen äußeren Gehäusebereich 4 auf. Der innere Gehäusebereich 3 und der äußere Gehäusebereich 4 bilden bevorzugt einen gemeinsamen Sinterkörper.

Der äußere Gehäusebereich 4 umgibt bei beiden beispielhaften Gehäusen 2 einen Aufnahmeraum 5 zur Aufnahme einer elektrischen Spule 19 im Inneren des jeweiligen Gehäuses 2. Der Aufnahmeraum 5 wiederum umgibt im Fall beider beispielhafter Gehäuse 2 den inneren Gehäusebereich 3. In beiden Fällen umgibt der innere Gehäusebereich 3 eine Wellendurchführung 6 zur Durchführung einer Welle.

Der Aufnahmeraum 5 kann wie in beiden dargestellten Fällen eine drehsymmetrische Gestaltung mit der Drehachse X der Welle als Drehsymmetrieachse aufweisen. Dies gilt ebenfalls für die den Aufnahmeraum 5 in radialer Richtung begrenzende Fläche 7 des inneren Gehäusebereichs 3 und die den Aufnahmeraum 5 in radialer Richtung begrenzende Fläche 8 des äußeren Gehäusebereichs 4.

Bei den gezeigten Beispielen weisen in vorteilhafter Weise der Aufnahmeraum 5, die Fläche 7 und die Fläche 8 in einer zur Drehachse X der Welle senkrechten Schnittebene eine einem Polygon, nämlich bevorzugt einem Dreieck, angenäherte Form auf. Dabei weisen in vorteilhafter Weise sowohl die den Seiten des Polygons entsprechenden Bereiche sowie die den Ecken des Polygons entsprechenden Bereiche Krümmungen auf. Die den Seiten des Polygons entsprechenden Bereiche weisen schwächere Krümmungen auf als die den Ecken des Polygons entsprechenden Bereiche. In besonders vorteilhafter Weise wechseln sich die Bereiche mit schwächerer Krümmung und die Bereiche mit stärkerer Krümmung einander in Umfangsrichtung ab.

In den gezeigten Beispielen ist der äußere Gehäusebereich 4 im Bereich der stärker gekrümmten Bereiche des Aufnahmeraums 5 und der Flächen 7 und 8 dünnwandiger ausgeführt bzw. weist eine geringere Materialstärke in radialer Richtung auf als im Bereich der schwächer gekrümmten Bereiche des Aufnahmeraums 5 und der Flächen 7 und 8.

Die beispielhaften Gehäuse 2 der erfindungsgemäßen Federkraftbremse 1 weisen Distanzelemente 9 zur Schaffung eines Abstands zwischen einem Bremsgegenelement 10 und dem Gehäuse 2 auf. Darüber hinaus weisen die Gehäuse 2 Aufnahmen 11 für elastische Elemente zur Erzeugung der Bremskraft auf. Die Distanzelemente 9 und die Aufnahmen 11 sind in den gezeigten Beispielen bevorzugt in Bereichen des äußeren Gehäusebereichs 4 angeordnet, in denen die Fläche 8 und der Aufnahmeraum 5 eine geringere Krümmung aufweisen als in anderen Bereichen.

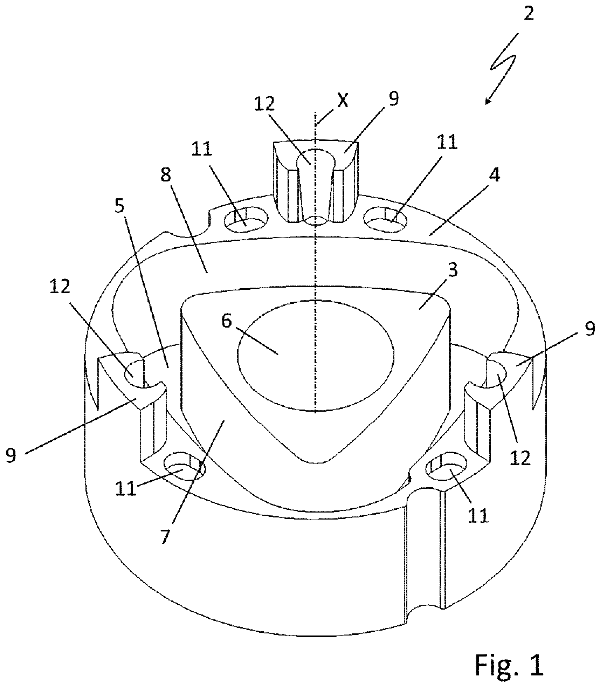

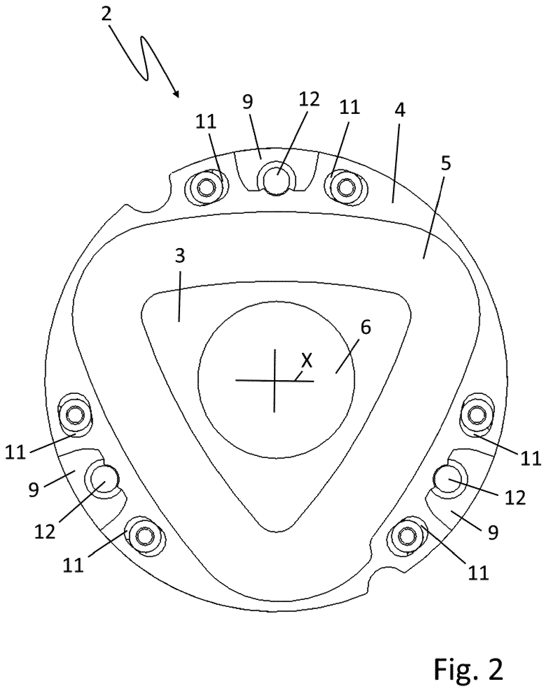

Bei dem in Fig. 1 und Fig. 2 dargestellten Beispielen weisen die Distanzelemente 9 Hohlräume 12 zur Aufnahme von Befestigungselementen auf. Die Hohlräume 12 sind in vorteilhafter Weise konisch gestaltet. Bevorzugt sind die Hohlräume 12 zur Welle hin offen ausgeführt.

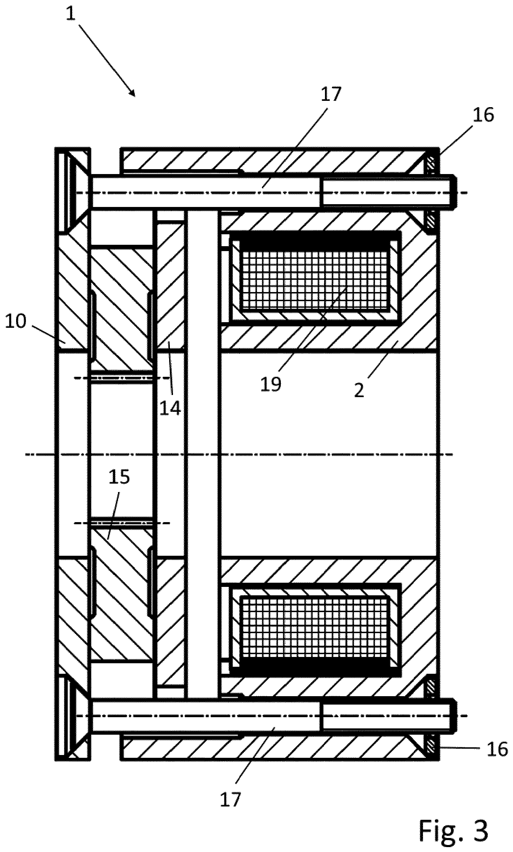

In Fig. 3 ist eine beispielhafte erfindungsgemäße Federkraftbremse 1 dargestellt, deren Bremsgegenelement 10 durch Sicherungselemente 16, die mit Befestigungselementen 17 zur Befestigung der Federkraftbremse 1 zusammenwirken, in seiner bestimmungsgemäßen Position gehalten wird. Auf diese Weise ist die beispielhafte Federkraftbremse 1 provisorisch vormontiert. Dieser Zustand erleichtert den Transport der Federkraftbremse 1 sowie dessen endgültige Montage an einer Vorrichtung 18. Die Sicherungselemente 16 sind in bevorzugter Weise als Unverlierbarkeitsscheibe ausgeführt.

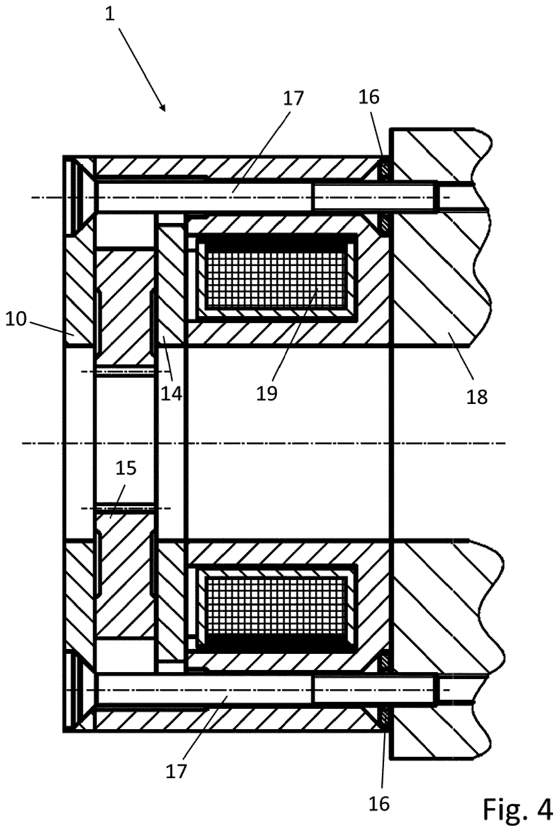

In Fig. 4 ist dargestellt, wie die in Fig. 3 im provisorisch vormontierten Zustand dargestellte beispielhafte erfindungsgemäße Federkraftbremse 1 an einer Vorrichtung 18 montiert ist. Dies kann im gezeigten Beispiel in vorteilhafter Weise dadurch erfolgen, dass die Federkraftbremse 1 mittels der Befestigungselemente 17, die im gezeigten Beispiel als Schrauben ausgeführt sind, in entsprechenden Befestigungsgegenelementen, im gezeigten Beispiel bevorzugt geeignete Gewinde, der Vorrichtung 18 befestigt werden. Im gezeigten Beispiel können hierbei in vorteilhafter Weise die Sicherungselemente 16 an den Befestigungselementen 17 verbleiben. Die vorteilhafte Gestaltung der Sicherungselemente 16 als Klemmringe erlaubt es, die beispielhaft als Schrauben ausgeführten Befestigungselemente 17 in die dafür vorgesehenen Gewinde einzuschrauben, wobei die Klemmringe gegebenenfalls auf dem Gewinde der Schrauben abrutschen und so ein Eindrehen der Schrauben ermöglichen.

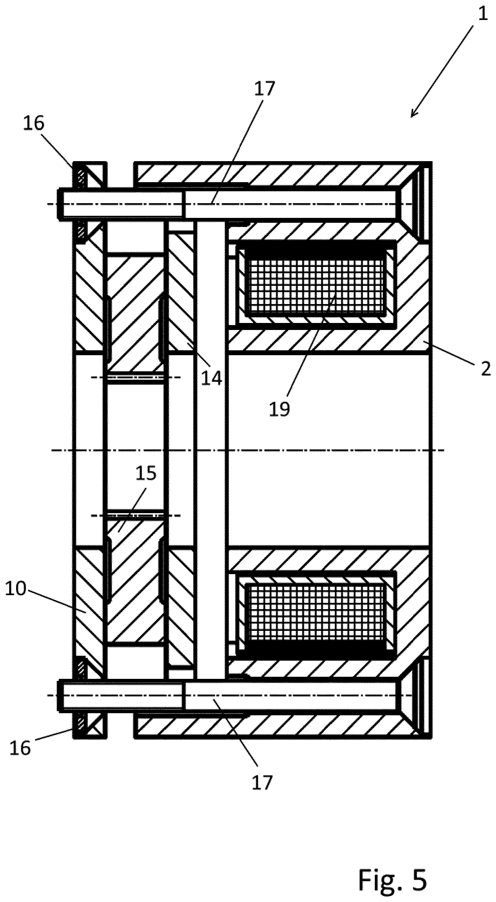

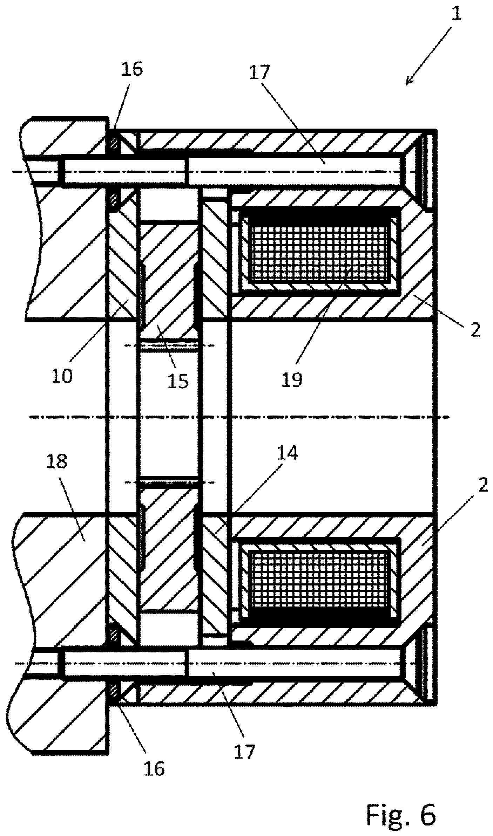

Bei dem in den Figuren 3 und 4 gezeigten Beispiel wird die beispielhafte Federkraftbremse 1 derart an der Antriebseinheit 18 befestigt, dass das Bremsgegenelement 10 von der Antriebseinheit 18 weg weist. Alternativ ist es möglich, die Federkraftbremse 1 auf die in Fig. 5 gezeigte Weise vorzumontieren. Auf diese Weise vormontiert eignet sich die Federkraftbremse 1 vorzugsweise dazu, auf die in Fig. 6 gezeigte Weise an einer Vorrichtung 18 montiert zu werden. Hierbei weist das Bremsgegenelement 10 zur Vorrichtung 18 hin.

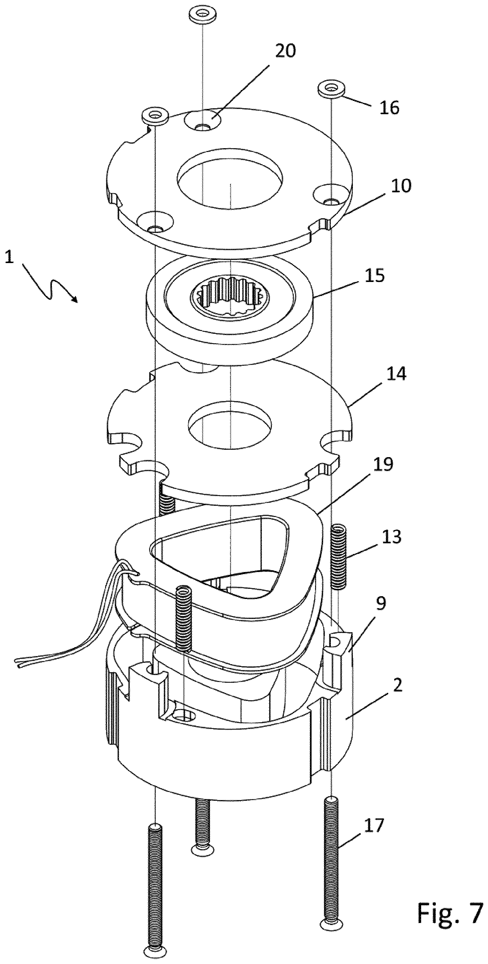

Anhand der Explosionsdarstellung in Figur 7 wird deutlich, dass sich die Bestandteile der Bremse - zumindest überwiegend - in axialer Richtung der Federkraftbremse 1 zusammenfügen lassen. Durch diese konstruktive Ausgestaltung in Verbindung mit dem erfindungsgemäßen Verfahren zur Überführung der Bremse in den vormontierten Zustand wird eine sehr schnelle und damit sehr wirtschaftliche Fertigung der vormontierten Federkraftbremse ermöglicht.

Die in diesem Beispiel gezeigte Federkraftbremse 1 weist zudem einen Freistich 24 im Bereich des Übergangs zwischen den an das Gehäuse 2 angeformten Distanzelementen 9 und dem Gehäuse 2, insbesondere dem äußeren Gehäusebereich 4, auf. Dieser Freistich 24 sorgt dafür, dass das Bremselement 14 plan an der Anlagefläche 25 des Gehäuses 2 anliegen kann, wenn die Bremse 1 im vollständig gelüfteten Zustand ist, ohne dass es aufgrund von Verrundungen im Bereich des Übergangs zwischen Distanzelement 9 und Gehäuse 2 dazu kommt, dass das Bremselement 14 nicht plan an der Fläche 25 anliegen kann. Dies ist insbesondere dann wesentlich, wenn die Distanzelemente 9 als Führung für die Bewegung des Bremselements 14 beim Öffnen und/oder Schließen der Bremse 1 dienen. In diesem Fall muss das Bremselement 14 bei geöffneter Bremse 1 gleichzeitig am Distanzelement 9 und an der Anlagefläche 25 anliegen. Der Hohlraum 12 kann wie im gezeigten Beispiel als Stufenbohrung ausgeführt sein.

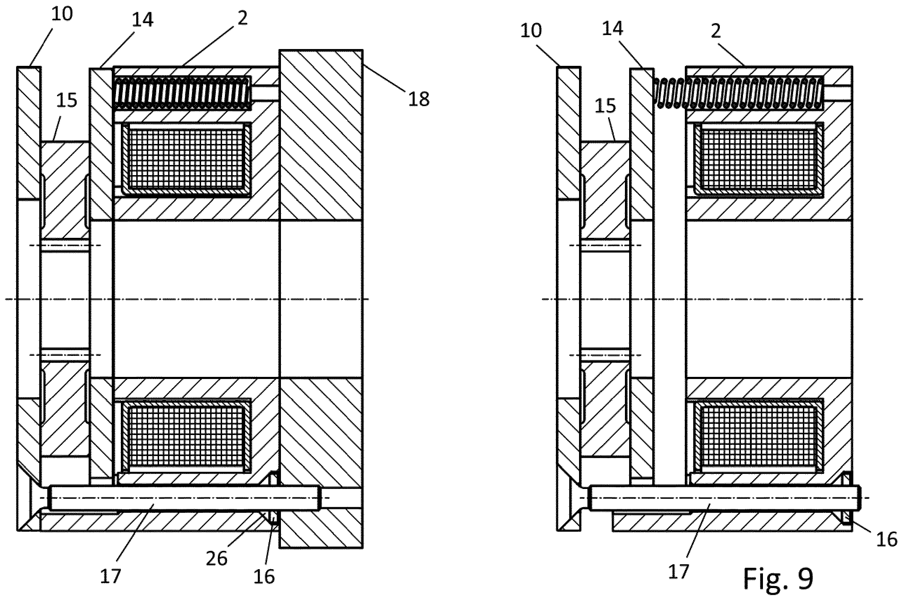

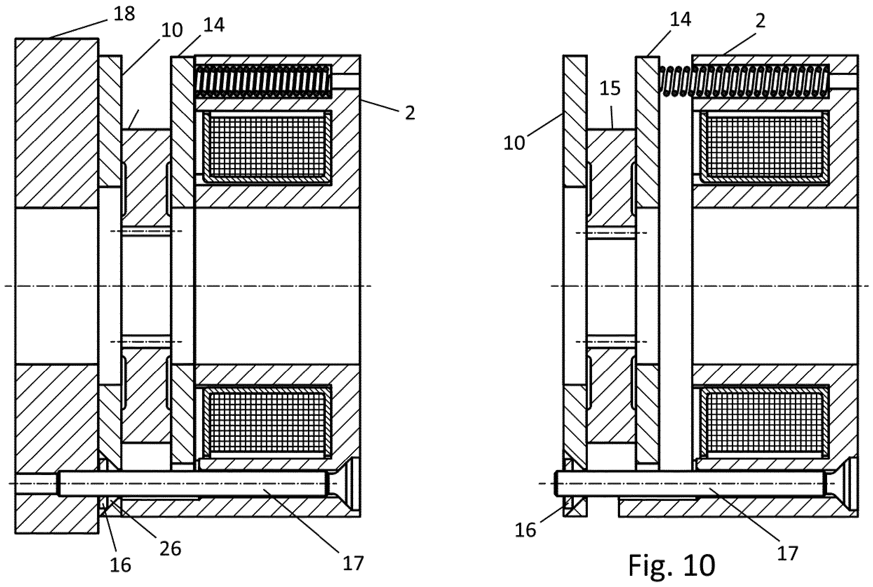

In den Figuren 9 und 10 ist dargestellt, wie die vormontierte Federkraftbremse 1 an eine Vorrichtung 18 montiert wird. Die Richtung der Montage wird im gezeigten Beispiel bei der Überführung der Bremse 1 in den vormontierten Zustand festgelegt. Im Falle des in Figur 9 gezeigten Beispiels werden die Befestigungselemente 17 vom Bremsgegenelement 10 kommend in die Federkraftbremse 1 eingeführt, die Sicherungselemente 16 werden von der Gehäuseseite kommend auf die Befestigungselemente 17 geschoben. So ergibt sich der in Figur 15 rechts dargestellte vormontierte Zustand. Bei der Montage an der Vorrichtung 18 kommt das Gehäuse 2 an der Vorrichtung 18 zum Anliegen. Zwischen dem Gehäuse und der Vorrichtung bilden sich Hohlräume 26 aus, in denen die Sicherungselemente 16 verbleiben können, ohne dass sie eine plane Anlage zwischen dem Gehäuse 2 und der Vorrichtung 18 behindern.

Bei der in Figur 10 dargestellten Montagesituation werden die Befestigungselemente 17 in umgekehrter Richtung, nämlich von der Gehäuseseite der Federkraftbremse 1 her kommend in die Federkraftbremse 1 eingeführt. Die Sicherungselemente 16 werden von der Seite des Bremsgegenelementes 10 kommend auf die Befestigungselemente 17 aufgeschoben. Die so erzeugte vormontierte Bremse kann dann wie links in Figur 10 dargestellt an die Vorrichtung 18 montiert werden. Die Sicherungselemente 16 werden auch bei diesem Beispiel in vorteilhafter Weise durch Hohlräume 26 aufgenommen.

In besonders vorteilhafter Weise sind in dem in den Figuren 9 und 10 gezeigten Beispiel die Hohlräume 26 als Vertiefungen 20, insbesondere Senkungen, in Bremsgegenelement 10 und/oder Gehäuse 2 ausgeführt. Hierdurch können sie einerseits zur Aufnahme eines entsprechend gestalteten Endes eines Befestigungselementes 17, insbesondere eines Schraubenkopfes, dienen, gleichzeitig können sie einen Hohlraum 26 bereitstellen, der das Sicherungselement 16 aufnimmt.

Von besonderem Vorteil ist es, wenn die erfindungsgemäße Federkraftbremse 1 sowohl im Bereich einer Oberfläche des Bremsgegenelements 10 als auch im Bereich einer Oberfläche des Gehäuses 2 jeweils eine Vertiefung 20 aufweist. Jede Vertiefung 20 kann bei der Montage der Federkraftbremse 1 an einer Vorrichtung 18 einen Hohlraum 26, in der das Sicherungselement 16 aufgenommen werden kann, ausbilden. Auf diese Weise können Federkraftbremsen 1, die für die in Fig. 9 gezeigte Montagevariante bestimmt sind, und Federkraftbremsen 1, die für die in Fig. 10 gezeigte Montagevariante bestimmt sind, zumindest im Wesentlichen, aus den gleichen Bauteilen zusammengesetzt werden. Es wird erst bei der Überführung der Federkraftbremse 1 in den vormontierten Zustand festgelegt, für welche Variante der Montage die jeweilige vormontierte Federkraftbremse 1 geeignet und bestimmt ist.

### Bezugszeichenliste:

- 1: Federkraftbremse
- 2: Gehäuse
- 3: innerer Gehäusebereich
- 4: äußerer Gehäusebereich
- 5: Aufnahmeraum
- 6: Wellendurchführung
- 7: Fläche des inneren Gehäusebereichs
- 8: Fläche des äußeren Gehäusebereichs
- 9: Distanzelement
- 10: Bremsgegenelement
- 11: Aufnahme
- 12: Hohlraum
- 13: Feder
- 14: Bremselement
- 15: Bremsrotor
- 16: Sicherungselement
- 17: Befestigungselement
- 18: Vorrichtung
- 19: elektrische Spule
- 20: Vertiefung
- 24: Freistich
- 25: Anlagefläche
- 26: Hohlraum

- X: Drehachse

## Patentansprüche

1. Elektromagnetisch betätigbare Federkraftbremse (1),
mit einer elektrischen Spule (19) zum Betätigen der Federkraftbremse (1) und einem mit einer Welle verbindbaren Bremsrotor (15), wobei die Federkraftbremse (1) ein mit einer Federkraft beaufschlagtes Bremselement (14) aufweist, das zum Schließen der Federkraftbremse (1) den Bremsrotor (15) gegen das Bremsgegenelement (10) drückt, wobei die Federkraftbremse (1) durch ein Sicherungselement (16), insbesondere einen Klemmring, das mit einem Befestigungselement (17), insbesondere einer Schraube, zur Befestigung der Federkraftbremse (1) an einer Vorrichtung (18), insbesondere an einem Antriebssystem, zusammenwirkt, in einem vormontierten Zustand zusammengehalten wird,
**dadurch gekennzeichnet,**
**dass** sowohl im Bereich einer Oberfläche eines Gehäuses (2) der Federkraftbremse (1) als auch im Bereich einer Oberfläche des Bremsgegenelements (10) jeweils eine Vertiefung (20) vorgesehen ist, die bei der Montage der Federkraftbremse an der Vorrichtung (18) einen Hohlraum (26) zur Aufnahme des Sicherungselements (16) ausbilden kann.

2. Federkraftbremse (1) nach einem der vorigen Ansprüche,
**dadurch gekennzeichnet,**
**dass** durch das Sicherungselement (16) das Bremsgegenelement (10) in seiner bestimmungsgemäßen Position an der Federkraftbremse (1) gehalten wird.

3. Federkraftbremse (1) nach einem der vorigen Ansprüche,
**dadurch gekennzeichnet,**
**dass** durch das Sicherungselement (16) eine Klemmkraft auf das Befestigungselement (17) ausgeübt wird, die im vormontierten Zustand ein unbeabsichtigtes Verschieben des Sicherungselements (16) auf dem Befestigungselement (17) verhindert.

4. Federkraftbremse (1) nach einem der vorigen Ansprüche,
**dadurch gekennzeichnet,**
**dass** die Federkraftbremse (1) einen inneren und/oder einen äußeren Gehäusebereich (3, 4) aufweist, der innere Gehäusebereich (3) und/oder der äußere Gehäusebereich (4), vorzugsweise der einteilige innere und äußere Gehäusebereich (3, 4), aus einem Sinterwerkstoff hergestellt ist.

5. Federkraftbremse (1) nach einem der vorigen Ansprüche,
**dadurch gekennzeichnet,**
**dass** die Federkraftbremse (1) ein Distanzelement (9) zur Schaffung eines Abstands zwischen dem Bremsgegenelement (10) der Federkraftbremse (1) dem Gehäuse (2) der Federkraftbremse (1) aufweist, wobei das Distanzelement (9) im Inneren einen Hohlraum (12) zur Aufnahme des Befestigungselements (17), aufweist.

6. Federkraftbremse (1) nach Anspruch 5,
**dadurch gekennzeichnet,**
**dass** das Distanzelement (9) an das Gehäuse (2), insbesondere den äußeren Gehäusebereich (4), angeformt ist.

7. Federkraftbremse (1) nach einem der Ansprüche 5 bis 6,
**dadurch gekennzeichnet,**
**dass** die zur Welle hinweisenden Bereiche des Distanzelements (9), die den Hohlraum (12) begrenzen, eine geringere Materialstärke aufweisen als die von der Welle wegweisenden Bereiche des Distanzelements (9), die den Hohlraum (12) begrenzen, insbesondere wobei der Hohlraum (12) zur Welle hin offen ist.

8. Antriebssystem mit einer Federkraftbremse (1) nach einem der vorigen Ansprüche,
**dadurch gekennzeichnet,**
**dass** eine abzubremsende Welle des Antriebssystems mit dem Bremsrotor (15) verdrehsteif verbunden ist.

9. Verfahren zur Montage einer elektromagnetisch betätigbaren Federkraftbremse (1), insbesondere einer Federkraftbremse (1) nach einem der vorigen Ansprüche, an einer Vorrichtung (18), insbesondere an einem Antriebssystem, insbesondere einer Federkraftbremse (1) nach einem der vorigen Ansprüche,
wobei die Federkraftbremse (1) zunächst in einen vormontierten Zustand überführt wird, in dem die Federkraftbremse (1) durch ein Sicherungselement (16), das mit einem Befestigungselement (17) zum Befestigen der Federkraftbremse (1) an der Vorrichtung zusammenwirkt, zusammengehalten wird, wobei die Federkraftbremse (1) zu einem späteren Zeitpunkt mit dem Befestigungselement (17) an der Vorrichtung montiert wird,
**dadurch gekennzeichnet,**
**dass** sich bei der Montage der Federkraftbremse (1) an der Vorrichtung (18) ein Hohlraum (26) zwischen der Federkraftbremse (1) und der Vorrichtung (18) ausbildet, in dem das Sicherungselement (16) nach der Befestigung verbleibt.

10. Verfahren nach Anspruch 9,
**dadurch gekennzeichnet,**
**dass** bei der Überführung der Federkraftbremse (1) in den vormontierten Zustand an der Vorrichtung (18) ein mechanischer Widerstand des Sicherungselements (16) überwunden wird, insbesondere das Sicherungselement (16) eine elastische und/oder plastische Verformung erfährt.

11. Verfahren nach Anspruch 9 oder 10,
**dadurch gekennzeichnet,**
**dass** das Überführen der Federkraftbremse (1) in den vormontierten Zustand in einer Presse erfolgt.

## Claims

1. Electromagnetically operable spring brake (1),
having an electric coil (19) for actuating the spring brake (1) and a brake rotor (15) which is connectable via a shaft, wherein the spring brake (1) comprises a braking element (14) which is loaded with spring force and which presses the brake rotor (15) against the braking counter element (10) in order to close the spring brake (1), wherein the spring brake (1) is held together in a pre-assembled state by a securing element (16), in particular a clamping ring, which interacts with an attachment element (17), in particular with a screw, to attach the spring brake (1) onto an apparatus (18), in particular onto a drive system,
**characterized in that**,
both in the region of a surface of a housing (2) of the spring brake (1), as well as in the region of a surface of the braking counter element (10), a recess (20) is provided which can form a cavity (26) for receiving the securing element (16) when the spring brake (1) is mounted onto the apparatus (18).

2. Spring brake (1) in accordance with the preceding claim,
**characterized in that**
the braking counter element (10) is held in its intended place on the spring brake (1) by the securing element (16).

3. Spring brake (1) in accordance with either of the preceding claims,
**characterized in that**
a clamping force is exerted onto the attachment element (17) by the securing element (16) which, in the pre-assembled state, prevents an unintentional displacement of the securing element (16) on the attachment element (17).

4. Spring brake (1) in accordance with any of the preceding claims,
**characterized in that**
the spring brake (1) comprises an inner and/or an outer housing region (3, 4) and **in that** the inner housing region (3) and/or the outer housing region (4), preferably the one-piece inner and outer housing region (3, 4), are made of a sinter material.

5. Spring brake (1) in accordance with any of the preceding claims,
**characterized in that**
the spring brake (1) comprises a distancing element (9) for producing a distance between the braking counter element (10) of the spring brake (1) and the housing (2) of the spring brake (1), wherein the distancing element (9) comprises a cavity on the inside for receiving an attachment element (17).

6. Spring brake (1) in accordance with claim 5,
**characterized in that**
the distancing element (9) is molded onto the housing (2), in particular onto the outer housing region (4).

7. Spring brake (1) in accordance with either of claims 5 or 6,
**characterized in that**
the regions of the distancing element (9) which face the shaft and which define the cavity (12) comprise a lesser material strength than the regions of the distancing element (9) which face away from shaft and which define the cavity (12), in particular wherein the cavity (12) is open toward the shaft.

8. Drive system with a spring brake (1) in accordance with any of the preceding claims, **characterized in that** a shaft of the drive system that is to be decelerated is rotationally rigidly connected to the braking rotor (15).

9. Method for assembling an electromagnetically operable spring brake (1), in particular a spring brake (1) in accordance with any of the preceding claims, on an apparatus (18), in particular on a drive system, in particular of a spring brake (1) in accordance with any of the preceding claims, wherein the spring brake (1) is first transferred into a pre-assembled state in which the spring brake (1) is held together by a securing element (16) which interacts with an attachment element (17) in order to attach the spring brake (1) onto the apparatus (18), wherein, at a later point in time, the spring brake (1) is mounted onto the apparatus with the attachment element (17),
**characterized in that**
a cavity is formed when mounting the spring brake (1) onto the apparatus (18) in which the securing element (16) rests after attachment.

10. Method in accordance with claim 9,
**characterized in that**
when the spring brake (1) is transferred into the pre-assembled state, a mechanical resistance of the securing element (16) is overcome on the apparatus (18), in particular in that the securing element (16) undergoes an elastic and/or plastic deformation.

11. Method in accordance with either of claims 9 or 10,
**characterized in that**
transferring the spring brake (1) into the pre-assembled state is carried out in a press.

## Revendications

1. Frein à ressort électromagnétique (1) comprenant une bobine électrique (19) pour actionner le frein à ressort (1) et un rotor de frein (15) relié à un arbre,
- le frein à ressort (1) ayant un élément de frein (14) sollicité par une force de ressort qui, pour serrer le frein à ressort (1) pousse le rotor de frein (15) contre l'élément complémentaire de frein (10),
- le frein à ressort (1) étant tenu par un élément de retenue (16), notamment un anneau de serrage coopérant avec un élément de fixation (17), notamment une vis pour fixer le frein à ressort (1) à un dispositif (18), notamment à un système d'entraînement, en le maintenant assemblé dans son état précédant le montage,
frein **caractérisé en ce que**
à la fois dans la région de la surface supérieure du boîtier (2) du frein à force de ressort (1) et aussi dans la zone d'une surface supérieure de l'élément complémentaire de frein (10), on a respectivement une cavité (20) qui, au montage du frein à ressort sur un dispositif (18), développe un creux (26) pour recevoir l'élément de retenue (16).

2. Frein à ressort (1) selon la revendication précédente,
**caractérisé en ce que**
l'élément de retenue (16) maintient l'élément complémentaire de frein (10) dans sa position définie contre le frein à ressort (1).

3. Frein à ressort (1) selon l'une des revendications précédentes,
**caractérisé en ce que**
l'élément de retenue (16) exerce une force de serrage sur l'élément de fixation (17) et qui, à l'état préassemblé, évite un coulissement accidentel de l'élément de retenue (16) sur l'élément de fixation (17).

4. Frein à ressort (1) selon l'une des revendications précédentes,
**caractérisé en ce que**
le frein à ressort (1) a une zone de boîtier (3, 4) intérieure et/ou extérieure, la zone intérieure de boîtier (3) et/ou la zone extérieure de boîtier (4) étant réalisées de préférence en une seule pièce intérieure et la zone extérieure de boîtier (3, 4) est en un matériau fritté.

5. Frein à ressort (1) selon l'une des revendications précédentes,
**caractérisé en ce que**
le frein à ressort (1) comporte un élément d'écartement (9) pour définir la distance entre l'élément complémentaire (10) du frein à ressort (1) et le boîtier (2) du frein à ressort (1), cet élément d'écartement (9) ayant un évidement intérieur (12) pour recevoir l'élément de fixation (17).

6. Frein à ressort (1) selon la revendication 5,
**caractérisé en ce que**
l'élément d'écartement (9) est formé sur le boîtier (2), notamment dans sa zone extérieure (4).

7. Frein à ressort (1) selon l'une des revendications 5 à 6,
**caractérisé en ce que**
les zones de l'élément d'écartement (9) tournées vers l'arbre et délimitant l'évidement (12) ont une épaisseur de matière, inférieure à celle des zones de l'élément d'écartement (9) qui sont dirigées dans la direction opposée et qui délimitent l'évidement (12), notamment l'évidement (12) est ouvert en direction de l'arbre.

8. Système d'entraînement comportant un frein à ressort (1) selon l'une des revendications précédentes,
**caractérisé en ce que**
l'arbre à freiner du système d'entraînement est relié solidairement en rotation au rotor de frein (15).

9. Procédé de montage d'un frein à ressort électromagnétique (1), notamment d'un frein à ressort (1) selon l'une des revendications précédentes, sur un dispositif (18), notamment un système d'entraînement, notamment un frein à ressort (1) selon l'une des revendications précédentes,
le frein à ressort (1) étant tout d'abord mis dans un état préassemblé dans lequel le frein à ressort (1) est maintenu réuni par un élément de retenue (16) coopérant avec un élément de fixation (17) pour fixer le frein à ressort (1) au dispositif, le frein à ressort (1) étant ensuite monté sur le dispositif avec l'élément de fixation (17),
procédé **caractérisé en ce que**
au montage du frein à ressort (1) sur le dispositif (18), il se développe un creux (26) entre le frein à ressort (1) et le dispositif (18) dans lequel l'élément de retenue (16) reste après la fixation.

10. Procédé selon la revendication 9,
**caractérisé en ce que**
pour mettre le frein à ressort (1) préassemblé sur le dispositif (18), on dépasse la résistance mécanique de l'élément de retenue (16), notamment on exerce une déformation élastique et/ou plastique sur l'élément de retenue (16).

11. Procédé selon la revendication 9 ou 10,
**caractérisé en ce que**
on met le frein à ressort (1) à l'état préassemblé dans une presse.
